# EUROPÄISCHE PATENTANMELDUNG

(11) **EP 4 790 275 A1**
(43) Veröffentlichungstag der Anmeldung: **12.08.2026**
(21) Anmeldenummer: 26156272.2
(22) Anmeldetag: 04.02.2026
(51) Int. Cl.: F16F 15/02, G10K 11/16

(54) **KOMPONENTE FÜR EIN ARBEITSGERÄT EINER BAUMASCHINE UND/ODER FÜR EINE BAUMASCHINE**

(30) Priorität: 10.02.2025 DE 102025104727
(71) Anmelder: Liebherr-Werk Nenzing GmbH, 6710 Nenzing (AT)
(72) Erfinder: WASSMANN, Linus Felix, 6773 Vandans (AT); KOLBE, Frank, 6460 Imst (AT); FISCHER, Helmut, 6719 Bludesch (AT)
(74) Vertreter: Lorenz Seidler Gossel Part. mbB

(57) **Zusammenfassung**

Die vorliegende Erfindung betrifft eine Komponente für ein Arbeitsgerät einer Baumaschine und/oder für eine Baumaschine, wobei die Komponente einen Grundkörper und ein an oder in dem Grundkörper angeordnetes Bauteil aufweist, wobei das Bauteil in wenigstens einem Abschnitt derart ausgebildet ist, dass der Abschnitt eine Vibrationsfalle für eine in den Abschnitt einlaufende Körperschallwelle bildet.

## Beschreibung

Die vorliegende Erfindung betrifft eine Komponente für ein Arbeitsgerät einer Baumaschine und/oder für eine Baumaschine, wobei die Komponente einen Grundkörper und ein an oder in dem Grundkörper angeordnetes Bauteil aufweist.

Komponenten mit gedämpften oder ungedämpften Vibrationsfallen, welche durch eine Energiereduktion durch gezielte Änderung der Ausbreitungsgeschwindigkeit von Körperschallwellen in der Komponente realisiert werden, werden bisher nur sehr selten eingesetzt. Anstelle der Änderung der Ausbreitungsgeschwindigkeit von Körperschallwellen kann alternativ auf den Reaktionskoeffizienten Bezug genommen werden. Die Reduktion dieses Koeffizienten lässt sich einfach quantifizieren.

Ein bekanntes Beispiel dafür sind Verdichter- bzw. Turbinenschaufeln, wobei diese einstückig mit den Vibrationsfallen gefertigt werden.

Vor diesem Hintergrund liegt der vorliegenden Erfindung die Aufgabe zugrunde, eine oben genannte Komponente, insbesondere im Hinblick auf die Reduzierung von Geräuschemissionen durch Vibrationen der Komponente, zu verbessern.

Diese Aufgabe wird durch den Gegenstand mit den Merkmalen des unabhängigen Anspruchs 1 gelöst. Vorteilhafte Weiterbildungen der Erfindung sind Gegenstand der abhängigen Ansprüche.

Demnach ist erfindungsgemäß vorgesehen, dass das Bauteil in wenigstens einem Abschnitt derart ausgebildet ist, dass der Abschnitt eine Vibrationsfalle für eine in den Abschnitt einlaufende Körperschallwelle bildet.

Die Begriffe "Vibration" und "Schwingung" sind im Rahmen dieser Erfindung vorzugsweise synonym zu verwenden.

Vorzugsweise ist vorgesehen, dass der Abschnitt derart ausgebildet ist, dass die Ausbreitungsgeschwindigkeit einer sich in dem Abschnitt ausbreitenden Köperschallwelle reduziert wird.

Vorzugsweise ist vorgesehen, dass der Reflektionskoeffizient um mehr als 50 %, um mehr als 70 %, um mehr als 90 %, um mehr als 95 % oder um mehr als 99 % reduziert wird.

Die Ausbreitungsgeschwindigkeit kann eine Phasengeschwindigkeit der Körperschallwelle sein.

Die Komponente kann ein Strukturelement sein.

Das Bauteil weist vorzugsweise eine oder mehrere gedämpfte oder ungedämpfte Vibrationsfallen auf.

Vorzugsweise basieren die eine oder mehreren Vibrationsfallen auf dem Prinzip, dass durch eine gezielte Steifigkeitsveränderung im Material die Ausbreitungsgeschwindigkeit der Körperschallwellen, insbesondere Biegewellen in der Komponente beeinflusst wird und diese so im Bereich der Vibrationsfalle oder jeweils der Vibrationsfallen gebündelt werden.

Vorzugsweise bestehen Material- und/oder Geometrieunterschiede zwischen dem Grundkörper und dem die Vibrationsfalle bildenden Bauteil.

Der Grundkörper weist vorzugsweise keine gedämpfte oder ungedämpfte Vibrationsfallen auf, die direkt bei der Fertigung des Grundkörpers im Herstellungsprozess mit dem Grundkörper ausgeformt wurden.

Vorzugsweise ist vorgesehen, dass eine Eigenschaft und/oder Geometrie des Abschnitts, insbesondere in einem Querschnitt, mindestens abschnittsweise gemäß der Funktion $h \left(x\right) = {h}_{0} + c ∗ {\left|x\right|}^{m}$ ausgebildet ist, wobei *h*(*x*) einen sich in Abhängigkeit der Variablen *x* ergebenden Funktionswert, h₀ eine Konstante, c einen Faktor und *m* einen Exponenten der Variablen x bezeichnet.

Vorzugsweise ist vorgesehen, dass die Geometrie, insbesondere Kontur, des Abschnitts gemäß einem Plot eines Funktionsgraphen der genannten Funktion ausgebildet ist und/oder eine weitere Geometrie, insbesondere Kontur, des Abschnitts gerade oder eben verläuft oder dass zwei, insbesondere symmetrisch angeordnete, ineinander übergehende Geometrien, insbesondere Konturen, des Abschnitts jeweils gemäß einem Plot eines Funktionsgraphen der genannten Funktion ausgebildet sind.

Vorzugsweise ist vorgesehen, dass die Eigenschaft eine Abmessung, insbesondere Wandungsdicke, des Abschnitts ist und die Variable *x* eine, insbesondere kartesische, Koordinate ist und der Funktionswert *h*(*x*) der sich entlang der Koordinate verändernden Abmessung entspricht und/oder die Konstante h₀ eine konstante Abmessung, insbesondere Wandungsdicke, des Abschnitts ist.

Vorzugsweise wird die Abmessung, bspw. in Form einer Wandungsdicke entlang der Funktion *h*(*x*) = *h*₀ + c *_{*} x^{m}* reduziert, wobei *h*₀ eine konstante Abmessung, bspw. in Form einer minimalen Wandungsdicke, *x* eine Koordinate, c ein Faktor und *m* einen Exponenten von *x* bezeichnet. Der Wert von m liegt vorzugsweise zwischen zwei und vier.

In der Funktion kann die Variable *x* auch den mathematischen Absolutbetrag der Koordinate *x* bezeichnen, womit sich insbesondere bei einem Exponenten *m* in Form einer rationalen Zahl und bei entsprechender Positionierung des Koordinatensystems eine symmetrische Ausbildung des Abschnitts ergibt.

Die Funktion kann damit auch als *h(x)* = h₀ + c _{*} |*x*|*^{m}* geschrieben werden.

Das Koordinatensystem auf dem die Koordinate x beruht kann beliebig angeordnet werden und ist vorzugsweise ein kartesisches Koordinatensystem.

Vorzugsweise ist vorgesehen, dass h₀ den Wert null und/oder *m* einen Wert zwischen zwei und sieben, insbesondere zwei, drei oder vier, aufweist und/oder *c* < 1 gilt.

Vorzugsweise ist vorgesehen, dass der Abschnitt ein Randbereich des Bauteils oder ein Kernbereich des Bauteils ist.

Vorzugsweise ist vorgesehen, dass die Steifigkeit des Abschnitts gegenüber der Steifigkeit eines an den Abschnitt angrenzenden Teils des Bauteils verändert, insbesondere reduziert, ist.

Vorzugsweise ist vorgesehen, dass das Bauteil ein Dämpfungselement aufweist, wobei das Dämpfungselement an mindestens einem Bereich des Abschnitts, insbesondere an einem Randbereich des Abschnitts, angeordnet ist.

Die Wirksamkeit der Vibrationsfalle oder Vibrationsfallen kann gesteigert werden, indem zusätzlich ein Dämpfungselement bzw. Dämpfungsmaterial aufgebracht wird. Vorzugsweise wird, zusätzlich zur Redution der Schwingungsenergie, durch die Geschwindigkeitsänderung der Körperschallwellen, insbesondere Biegewellen, auch die Abstrahlungseffizienz der Oberflächen deutlich reduziert.

Vorzugsweise ist vorgesehen, dass das Bauteil mit dem Grundkörper, insbesondere durch Schweißen, Kleben, Schrauben und/oder Stecken, verbunden ist.

Vorzugsweise ist vorgesehen, dass das Bauteil mit dem Grundkörper lösbar verbunden ist.

Vorzugsweise ist vorgesehen, dass das Bauteil in einer Ausnehmung des Grundkörpers angeordnet und/oder in den Grundkörper eingefasst ist oder an einer Wandung des Grundkörpers angeordnet ist.

Das Bauteil kann in den Grundkörper, bspw. in eine Wandung des Grundkörpers, eingefasst sein.

Vorzugsweise ist vorgesehen, dass das Bauteil nach Herstellung des Grundkörpers an dem Grundkörper angeordnet worden ist und/oder der Grundkörper mit dem Bauteil nachgerüstet wurde.

Vorzugsweise ist vorgesehen, dass das Bauteil wenigstens zwei der genannten Abschnitte aufweist, wobei jeder der zwei Abschnitte ein Randbereich des Bauteils ist.

Vorzugsweise ist vorgesehen, dass mehrere der genannten Bauteile an dem Grundkörper angeordnet sind.

Die Erfindung betrifft auch ein Arbeitsgerät unter anderem für eine Baumaschine mit einer oder mehrerer erfindungsgemäßer Komponenten nach einem der vorhergehenden Ansprüche.

Die Erfindung betrifft auch eine Baumaschine, insbesondere Seilbagger oder Rammgerät, mit einer oder mehrerer erfindungsgemäßer Komponente und/oder mit einem oder mehreren erfindungsgemäßer Arbeitsgeräten.

Die Erfindung kann aber auch in Kranen, Kühlgeräten, Klimageräten und anderen Arbeitsgeräten Anwendung finden.

Die Erfindung betrifft auch ein Verfahren zum Anordnen eines Bauteils an einem Grundkörper, wobei eine erfindungsgemäße Komponente entsteht, wobei das Bauteil nach Herstellung des Grundkörpers an dem Grundkörper angeordnet wird und/oder der Grundkörper mit dem Bauteil nachgerüstet wird.

Vorzugsweise erfolgt ein nachträgliches Anordnen eines Bauteils mit einem oder mehreren gedämpften oder ungedämpften Vibrationsfallen auf einen in einem Betrieb der Komponente direkt oder indirekt angeregten Grundkörper.

Aufgrund der teilweise aufwändigen Fertigung von mit gedämpften oder ungedämpften Vibrationsfallen versehenen Grundkörpern ist vorzugsweise vorgesehen, diese nach der Bauteilfertigung in den oder auf den Grundkörper ein- bzw. anzubringen.

Das Bauteil wird vorzugsweise nachträglich in den oder auf den Grundkörper ein- bzw. aufgebracht.

Der Grundkörper wird vorzugsweise unmodifiziert oder mit entsprechenden Aufnahmen gefertigt.

Anschließend wird das Bauteil nachträglich vorzugsweise so mit dem Grundkörper verbunden, dass ein Transfer von Schwingungsenergie vom Grundkörper auf das Bauteil gewährleistet ist.

Diese Verbindung ist vorzugsweise eine lösbare Verbindung und/oder eine Klebe- und/oder Schweißverbindung.

Vorzugsweise erfolgt ein nachträgliches Anbringen des Bauteils bzw. der Vibrationsfalle oder Vibrationsfallen an dem Grundkörper.

Vorzugsweise ist ein Transfer von Schwingungsenergie von dem Grundkörper zu dem Bauteil bzw. der Vibrationsfalle oder den Vibrationsfallen gewährleistet.

Eine spezifische, an die jeweiligen Anforderungen angepasste Positionierung der gedämpften oder ungedämpften Vibrationsfallen an den relevanten Stellen und die geometrischen Anpassungen der die gedämpften oder ungedämpften Vibrationsfallen umgebenden Struktur, welche den gezielten Transfer der Schwingungsenergie hin zu den Vibrationsfallen fördern, führt vorzugsweise zu einer Steigerung der Wirksamkeit der Vibrationsfalle oder den Vibrationsfallen.

Die Fertigung von Komponenten mit gedämpften oder ungedämpften Vibrationsfallen ist unter Umständen sehr aufwändig und in bestimmten Fällen nicht mit klassischen Fertigungsverfahren umsetzbar. Aus diesem Grund kann es sinnvoll, einen Grundkörper der Komponente ohne gedämpfte oder ungedämpfte Vibrationsfallen, die auch als Akustische Schwarze Löcher (ASL) bezeichnet werden, zu fertigen und dem Grundkörper ein oder mehrere Bauteile mit solchen Vibrationsfallen nachträglich hinzuzufügen.

Insbesondere wenn die Verbindung zwischen Grundkörper und Bauteil lösbar ist, wird ein Austausch des Bauteils im Rahmen einer nachträglichen Anpassung oder bei Beschädigung sowie der Prozess der Prüfung und Auslegung des Grundkörpers deutlich erleichtert.

Vorzugsweise ist vorgesehen, ein oder mehrere Bauteile mit einer oder mehrerer Vibrationsfallen, insbesondere ASL-Strukturen, nachträglich fest oder lösbar in oder auf den Grundkörper ein- bzw. anzubringen. Dies hat im Hinblick auf die Fertigung, die Wartung, den Austausch und die strukturmechanische Prüfung der Komponente vorzugsweise Vorteile.

An dieser Stelle wird darauf hingewiesen, dass die Begriffe "ein" und "eine" nicht zwingend auf genau eines der Elemente verweisen, wenngleich dies eine mögliche Ausführung darstellt, sondern auch eine Mehrzahl der Elemente bezeichnen können. Ebenso schließt die Verwendung des Plurals auch das Vorhandensein des fraglichen Elementes in der Einzahl ein und umgekehrt umfasst der Singular auch mehrere der fraglichen Elemente. Weiterhin können alle hierin beschriebenen Merkmale der Erfindung beliebig miteinander kombiniert oder voneinander isoliert beansprucht werden.

Weitere Vorteile, Merkmale und Effekte der vorliegenden Erfindung ergeben sich aus der nachstehenden Beschreibung bevorzugter Ausführungsbeispiele unter Bezugnahme auf die Figuren, in welchen gleiche oder ähnliche Bauteile durch dieselben Bezugszeichen bezeichnet sind. Hierbei zeigen:
- Fig. 1:: eine Querschnittsansicht eines Abschnitts eines Bauteils einer Ausführungsform einer erfindungsgemäßen Komponente.
- Fig. 2:: fünf Schnittansichten jeweils einer Ausführungsform einer erfindungsgemäßen Komponente.
- Fig. 3:: zwei schematische Skizzen zur Erläuterung jeweils einer Ausführungsform eines erfindungsgemäßen Verfahrens.

Die Wirkweise einer Vibrationsfalle in Form eines Akustischen Schwarzen Lochs (ASL) lässt sich an dem folgenden anschaulichen Beispiel erläutern.

Wenn jemand z.B. an eine Tür klopft, breiten sich ausgehend von der Stelle des Impulseintrags Oberflächenwellen als Körperschallwellen in Form von Biegewellen, aus. Diese Biegewellen sind mit dem bloßen Auge nicht zu erkennen, laufen zu den Rändern der Tür und werden dort reflektiert. Nach der Reflektion interferieren sie mit den anderen Biegewellenbestandteilen. Bei Festkörpern hängt die Ausbreitungsgeschwindigkeit von Biegewellen von der Frequenz ab (Dispersion). In der Theorie regt ein idealer Impuls alle Frequenzen einer Struktur an. Ein normales Anklopfen ist zwar kein idealer Impuls, regt aber trotzdem ein breites Band an Frequenzen an. Das hat zur Folge, dass sich die ausbreitenden Biegewellen in Abhängigkeit ihrer Frequenz unterschiedlich schnell ausbreiten. Das ist relevant, da der so genannte Abstrahlgrad, welcher ein Maß für die akustische Abstrahlung einer Struktur ist, von der Geschwindigkeit der Biegewellen abhängt. Wenn die Geschwindigkeit der Biegewellen kleiner ist, als die Schallgeschwindigkeit des umgebenden Mediums (in der Regel Luft), dann strahlt die Oberfläche keinen signifikanten Körperschall ab. Generell hängt die Geschwindigkeit der Biegewellen in Festkörpern nicht nur von der Frequenz, sondern auch von der lokalen Steifigkeit des Festkörpers ab. Bei sinkender Steifigkeit reduziert sich auch die Geschwindigkeit der Biegewellen und somit die Schallabstrahlung der Struktur.

Diesen Effekt machen sich ASL zunutze. Durch eine gezielte lokale Steifigkeitsreduktion bspw. entlang einer Funktion *h*(*x*) *= h*₀ + c *_{*} x^{m},* kann die Geschwindigkeit der Biegewellen theoretisch auf null reduziert werden. Dies wird erreicht, wenn lim(h(x)) für x→0 infinitesimal klein wird und *h*₀ = 0 gilt.

Die Größen c und *m* sind vorzugsweise frei wählbare Parameter der Funktion. Das hat zur Folge, dass sich die gesamte Körperschallwellenenergie im ASL sammelt und keine Reflektion am infinitesimal dünnen Rand erfolgt. Da es nicht möglich ist eine infinitesimale Materialdicke zu erreichen, ist es in der Praxis nicht möglich die Reflektion komplett zu verhindern, man erreicht jedoch den Effekt, dass die Körperschallwelle im Bereich des ASL sehr viel langsamer wird, der Abstrahlgrad somit örtlich sinkt und die Welle mehr Zeit in diesem Bereich verbringt. Durch das gezielte Aufbringen von Dämpfungsmaterial, kann dann im ASL die Körperschallwellenenergie sehr effizient dissipiert werden. Auf diese Weise ist es mit ASL möglich der Struktur sehr wirksam Schwingungsenergie zu entziehen. Das ASL wirkt demnach als eine Senke für die Schwingungsenergie. Zusätzlich wird durch die Reduktion der Geschwindigkeit der Körperschallwellen im Bereich des ASL auch der Abstrahlgrad lokal reduziert und so dort die Körperschallabstrahlung weitgehend verhindert.

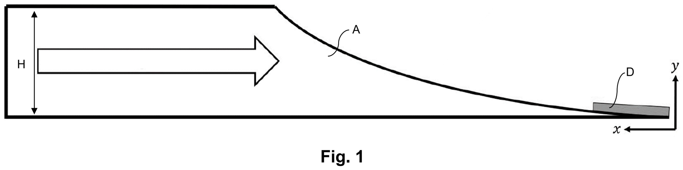

In Fig. 1 ist ein Abschnitt A eines Bauteils einer Ausführungsform einer erfindungsgemäßen Komponente dargestellt.

Der Abschnitt ist Teil einer Wandung, die eine Wandungsdicke H aufweist, des Bauteils.

In Fig. 1 ist ein kartesisches Koordinatensystem dargestellt, dass die Richtung der Koordinaten x und y zeigt.

Gemäß Fig. 1 weist der Abschnitt entlang der *x*-Koordinate, also von rechts nach links, bis der Abschnitt eine konstante Wandungsdicke H aufweist, eine gemäß der Funktion *h*(*x*) *= h*₀ + c *_{*} x^{m}* allmählich ansteigende Wandungsdicke auf, wobei *h*(*x*) die entlang der Koordinate x ansteigende Wandungsdicke der Wandung, c einen Faktor und *m* einen Exponenten von x bezeichnet. h₀ weist in diesem Beispiel den Wert null auf.

Der Abschnitt dient als Vibrationsfalle für eine in den Abschnitt von links nach rechts einlaufende Körperschallwelle in Form einer Biegewelle, die mit dem dicken Pfeil in Fig. 1 symbolisch dargestellt ist.

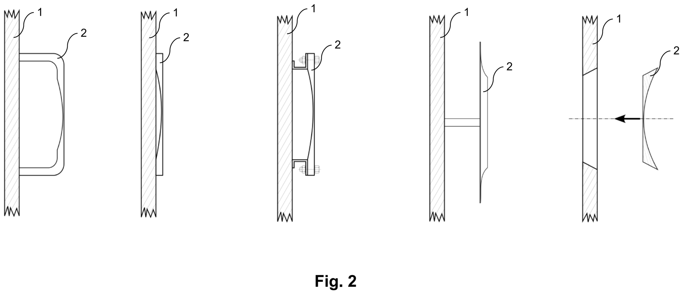

In der jeder der fünf Ansichten in Fig. 2 ist eine Wandung eines Grundkörpers 1 dargestellt. Jede der fünf Ansichten in Fig. 2 zeigt eine Ausführungsform.

Die erste Ansicht von links in Fig. 2 zeigt ein Bauteil 2 in Form eines Bügels, der eine Wandung mit einem als Vibrationsfalle ausgebildeten Abschnitt aufweist.

Die zweite Ansicht von links in Fig. 2 zeigt ein Bauteil 2 in Form einer Platte, die einen als Vibrationsfalle ausgebildeten Abschnitt aufweist.

Die dritte Ansicht von links in Fig. 2 zeigt ein Bauteil 2 in Form einer Platte, die einen als Vibrationsfalle ausgebildeten Abschnitt aufweist. Das Bauteil 2 ist über an der Wandung des Grundkörpers 1 angeordnete Verbindungselemente mit dem Grundkörper 1 verschraubt.

Die vierte Ansicht von links in Fig. 2 zeigt ein Bauteil 2 mit einer Platte, die zwei Abschnitte in Form von Randbereichen, die jeweils als Vibrationsfalle ausgebildet sind. Die Platte ist mittig an einem Stab oder an einer Leiste angeordnet, die wiederum an der Wandung des Grundkörpers 1 angeordnet ist.

Denkbar ist auch, dass die Platte in der in der vierten Ansicht von links in Fig. 2 dargestellten Ausführungsform rund ist und der Randbereich der runden Platte als Vibrationsfalle ausgebildet ist.

Die fünfte Ansicht von links in Fig. 2 zeigt ein keilförmiges Bauteil 2, dass in eine keilförmige Ausnehmung in der Wandung des Grundkörpers 1 eingefasst werden kann. Das Bauteil 2 weist einen als Vibrationsfalle ausgebildeten Abschnitt auf.

Die Vibrationsfalle kann in jeder Ausführungsform in Fig. 2 als Kuhle oder als Rund- oder Halbschale ausgebildet sein.

Die Wandungsdicken der Bauteile 2 aus Fig. 2 sind abschnittsweise in ihrem Querschnitt abschnittsweise gemäß der Funktion $h \left(x\right) = {h}_{0} + c ∗ {\left|x\right|}^{m}$ ausgebildet, wobei der Nullpunkt des für die Koordinate x maßgeblichen kartesischen Koordinatensystems auf Höhe der dünnsten Wandungsdicke der jeweiligen Vibrationsfalle liegt und die Koordinate *x* in Fig. 2 senkrecht verläuft, wobei der Funktionswert *h*(*x*) die sich entlang der Koordinate *x* verändernde Wandungsdicke und die Konstante h₀ die dünnsten Wandungsdicke bezeichnen.

Der Transferweg zur Übertragung von Schwingungsenergie von dem Grundkörper auf das Bauteil kann auf verschiedene Arten gestaltet werden. Denkbar ist ein Einfassen des Bauteils in den Grundkörper.

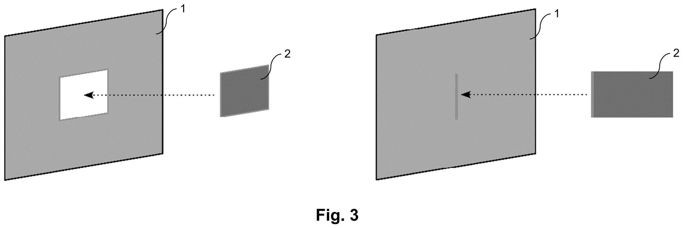

Diese Ausführungsform ist in Fig. 3 links illustriert. In einer Wandung des Grundkörpers 1 ist eine vorgefertigte Aufnahme vorhanden. In diese vorgefertigte Aufnahme wird das Bauteil 2 mit der Vibrationsfalle eingefasst.

Denkbar ist, dass das Bauteil durch eine starre Verbindung mit dem Grundkörper gekoppelt wird.

Diese Ausführungsform ist in Fig. 3 rechts illustriert. An einer Wandung des Grundkörpers 1 ist keine vorgefertigte Aufnahme vorhanden. An dieser Wandung wird das Bauteil 2 mit der Vibrationsfalle angeordnet und mit der Wandung durch eine starre Verbindung verbunden.

Bei den beiden oben vorgestellten Ausführungsformen unterscheiden sich die Wirkmechanismen. Wenn das Bauteil 2 in den Grundkörper 1 eingefasst wird, wird die Ausbreitungsgeschwindigkeit aller Körperschallwellen, insbesondere Biegewellen die durch den Grundkörper 1 hindurch laufen reduziert. Es ist daher nicht erforderlich das Bauteil 2 zwingend an einem stark schwingenden Bereich des Grundkörpers 1 anzuordnen. Wenn das Bauteil 2 hingegen auf dem Grundkörper 1 angebracht wird, z.B. durch eine starre Verbindung, dann wird nur Schwingungsenergie von Schwingungen an der Verbindungsstelle von dem Grundkörper 1 auf das Bauteil 2 übertragen. Das Bauteil 2 ist daher vorzugsweise an einem in einem Betrieb der Komponente stark schwingenden Bereich des Grundkörpers 1 angeordnet. Die stark schwingenden Bereiche des Grundkörpers 1 können beispielsweise mit einer Modalanalyse bestimmt werden.

Wenn ein Bauteil 2 in einen Grundkörper 1 eingefasst wird, ist eine zentrale Funktion, die die Fügestelle zwischen dem schwingenden Grundkörper 1 und dem Bauteil 2 vorzugsweise erfüllt, dass ein guter Transfer der Schwingungsenergie von dem Grundkörper 1 auf das Bauteil 2 erfolgen kann. Der Transfer kann durch Impedanzen der Fügestelle behindert werden. Eine Impedanz in einer Fügestelle tritt zum Beispiel durch Materialänderungen, abrupte Geometrieänderungen, Eigenspannungsänderungen etc. auf. An einer Impedanz wird ein Teil der Wellenenergie der Körperschallwelle reflektiert.

Um einen möglichst verlustfreien Transfer der Schwingungsenergie von dem Grundkörper 1 an das Bauteil 2 zu gewährleisten, werden Impedanzen an den Fügestellen vorzugsweise verringert oder vermieden. Im Falle einer Schweißverbindung ist dies bspw. durch eine nachträgliche Wärmebehandlung oder durch Spannungsarmglühen möglich.

Die streng stetige Umsetzung der Kontur des ASL (nach der theoretischen Funktion) ist nicht erforderlich. D.h. eine realistisch fertigbare (fräsbare) gestufte Ausprägung des ASL kann auch zielführend und fertigungstechnisch wesentlich praktikabler sein. Es wird hier angemerkt, dass jegliche ASL Kontur abweichend von der streng stetigen Funktion, insbesondere abgestuft oder in verschiedenen Phasenwinkel, in jeglicher Form und Ausprägung von der Erfindung abgedeckt ist.

## Patentansprüche

1. Komponente für ein Arbeitsgerät einer Baumaschine und/oder für eine Baumaschine, wobei die Komponente einen Grundkörper und ein an oder in dem Grundkörper angeordnetes Bauteil aufweist, **dadurch gekennzeichnet, dass** das Bauteil in wenigstens einem Abschnitt derart ausgebildet ist, dass der Abschnitt eine Vibrationsfalle für eine in den Abschnitt einlaufende Körperschallwelle bildet.

2. Komponente nach Anspruch 1, **dadurch gekennzeichnet, dass** eine Eigenschaft und/oder eine Geometrie des Abschnitts, insbesondere in einem Querschnitt, mindestens abschnittsweise gemäß der Funktion $h \left(x\right) = {h}_{0} + c ∗ {\left|x\right|}^{m}$ ausgebildet ist, wobei *h*(*x*) einen sich in Abhängigkeit der Variablen *x* ergebenden Funktionswert, h₀ eine Konstante, c einen Faktor und *m* einen Exponenten der Variablen x bezeichnet.

3. Komponente nach Anspruch 2, **dadurch gekennzeichnet, dass** h₀ den Wert null und/oder *m* einen Wert zwischen zwei und sieben, insbesondere zwei, drei, vier, fünf, sechs oder sieben, aufweist und/oder c < 1 gilt.

4. Komponente nach einem der Ansprüche 2 oder 3, **dadurch gekennzeichnet, dass** die Geometrie, insbesondere Kontur, des Abschnitts gemäß einem Plot eines Funktionsgraphen der genannten Funktion ausgebildet ist und/oder eine weitere Geometrie, insbesondere Kontur, des Abschnitts gerade oder eben verläuft oder dass zwei, insbesondere symmetrisch angeordnete, ineinander übergehende Geometrien, insbesondere Konturen ,des Abschnitts jeweils gemäß einem Plot eines Funktionsgraphen der genannten Funktion ausgebildet sind.

5. Komponente nach einem der Ansprüche 2 bis 4, **dadurch gekennzeichnet, dass** die Eigenschaft eine Abmessung, insbesondere Wandungsdicke, des Abschnitts ist und die Variable *x* eine, insbesondere kartesische, Koordinate ist und der Funktionswert *h*(*x*) der sich entlang der Koordinate verändernden Abmessung entspricht und/oder die Konstante h₀ eine konstante Abmessung, insbesondere Wandungsdicke, des Abschnitts ist.

6. Komponente nach einem der vorhergehenden Ansprüche, **dadurch gekennzeichnet, dass** der Abschnitt ein Randbereich des Bauteils oder ein Kernbereich des Bauteils ist.

7. Komponente nach einem der vorhergehenden Ansprüche, **dadurch gekennzeichnet, dass** die Steifigkeit des Abschnitts gegenüber der Steifigkeit eines an den Abschnitt angrenzenden Teils des Bauteils verändert, insbesondere reduziert, ist.

8. Komponente nach einem der vorhergehenden Ansprüche, **dadurch gekennzeichnet, dass** das Bauteil ein Dämpfungselement aufweist, wobei das Dämpfungselement an mindestens einem Bereich des Abschnitts, insbesondere an einem Randbereich des Abschnitts, angeordnet ist.

9. Komponente nach einem der vorhergehenden Ansprüche, **dadurch gekennzeichnet, dass** das Bauteil mit dem Grundkörper, insbesondere durch Schweißen, Kleben, Schrauben und/oder Stecken, verbunden ist.

10. Komponente nach einem der vorhergehenden Ansprüche, **dadurch gekennzeichnet, dass** das Bauteil mit dem Grundkörper lösbar verbunden ist.

11. Komponente nach einem der vorhergehenden Ansprüche, **dadurch gekennzeichnet, dass** das Bauteil in einer Ausnehmung des Grundkörpers angeordnet und/oder in den Grundkörper eingefasst ist oder an einer Wandung des Grundkörpers angeordnet ist.

12. Komponente nach einem der vorhergehenden Ansprüche, **dadurch gekennzeichnet, dass** das Bauteil nach Herstellung des Grundkörpers an dem Grundkörper angeordnet worden ist und/oder der Grundkörper mit dem Bauteil nachgerüstet wurde.

13. Komponente nach einem der vorhergehenden Ansprüche, **dadurch gekennzeichnet, dass** das Bauteil wenigstens zwei der genannten Abschnitte aufweist, wobei jeder der zwei Abschnitte ein Randbereich des Bauteils ist.

14. Komponente nach einem der vorhergehenden Ansprüche, **dadurch gekennzeichnet, dass** mehrere der genannten Bauteile an dem Grundkörper angeordnet sind.

15. Arbeitsgerät für eine Baumaschine mit einer oder mehrerer Komponenten nach einem der vorhergehenden Ansprüche.

16. Baumaschine, insbesondere Seilbagger oder Rammgerät, mit einer oder mehreren Komponenten nach einem der Ansprüche 1 bis 14 und/oder mit einem oder mehreren Arbeitsgeräten nach Anspruch 15.

17. Verfahren zum Anordnen eines Bauteils an einem Grundkörper, wobei eine Komponente nach einem der Ansprüche 1 bis 14 entsteht, **dadurch gekennzeichnet, dass** das Bauteil nach Herstellung des Grundkörpers an dem Grundkörper angeordnet wird und/oder der Grundkörper mit dem Bauteil nachgerüstet wird.
